# EUROPÄISCHE PATENTSCHRIFT

(11) **EP 2 069 167 B1**
(45) Veröffentlichungstag und Bekanntmachung des Hinweises auf die Patenterteilung: **11.09.2013**
(21) Anmeldenummer: 07787488.1
(22) Anmeldetag: 13.07.2007
(51) Int. Cl.: H02G 3/04, B60R 16/02, H02G 3/00

(54) **BEFESTIGUNGSEINRICHTUNG FÜR EINE LEITUNG**
FASTENING DEVICE FOR A LINE
DISPOSITIF DE FIXATION POUR UNE CONDUITE

(30) Priorität: 12.09.2006 DE 102006042663
(43) Veröffentlichungstag der Anmeldung: 17.06.2009
(73) Patentinhaber: Robert Bosch GmbH, 70442 Stuttgart (DE)
(72) Erfinder: NICKEL, Alexander, Yokohama, Kanagawa 224-8501 (JP); KAWAKAMI, Keiji, Yokohama, Kanagawa 233-0008 (JP)
(86) Internationale Anmeldenummer: PCT/EP2007/057219
(87) Internationale Veröffentlichungsnummer: WO 2008/031655

(56) Entgegenhaltungen:
- DE-A1- 10 101 013
- DE-A1- 10 332 035
- DE-C1- 19 848 651
- US-A1- 2001 020 536
- US-B1- 6 353 185

## Beschreibung

### Stand der Technik

Die Erfindung geht aus von einer Befestigungseinrichtung für eine Leitung, insbesondere für ein elektrisches Kabel in einem Kraftfahrzeug, nach der Gattung des Anspruches 1.

Aus der DE 43 41 384 C2 ist bereits eine Durchführung von Leitungen bekannt, welche in einem Träger arretierbare, die Leitung dichtend aufnehmende, elastische Tüllen aufweist, die in ihren Fußbereichen in mit dem Rand des Trägers in Verbindung stehendene Ausnehmungen passend einschiebbar sind. Die Ausnehmungen für die Tüllen sind radial ausgebildet und entsprechen in ihrer Breite dem Tüllendurchmesser. Zur Arretierung der Tüllen in den Ausnehmungen ist zusätzlich ein den Träger randseitig umschließender Ring vorgesehen, welcher die Tüllen in der eingeschobenen Position sichert, wodurch die Gesamtanordnung konstruktiv aufwendig und das Einfügen der Kabel mit den Tüllen zeitaufwendig wird.

Die DE 103 32 035 A1 zeigt überdies eine Dichtungstülle für eine Leitungsdurchführung in einer Wandung, gebildet aus einem elastischen Dichtungskörper mit einem Leitungsaufnahmekanal zur Anordnung in der Leitungsdurchführung. Dabei soll der Dichtungskörper eine Anlagefläche für eine Seite des die Leitungsdurchführung umgebenden Randbereichs der Wandung und Rastelemente für einen Eingriff mit der Rückseite des Randbereichs aufweisen. Dabei ist der axiale Abstand der Rastelemente von der Anlagefläche kleiner als die Dicke der Wandung.

### Offenbarung der Erfindung

Die erfindungsgemäße Vorrichtung mit den Merkmalen des unabhängigen Anspruchs hat demgegenüber den Vorteil, dass die Befestigungseinrichtung sowohl konstruktiv als auch hinsichtlich der Montage deutlich vereinfacht wird. Die für das Einsetzen der Leitung mit der sie umgebenden Tülle benötigte Montagekraft kann dabei niedrig gehalten werden, da die segmentierte Oberfläche der Tüllenkontur auch bei Verwendung von Kunststoff für die Herstellung der Tülle verhältnismäßig leicht verformbar ist.

Hierbei ist es besonders vorteilhaft, wenn die Kontur der Tülle nutförmig ausgebildet ist mit einem unregelmäßig gestalteten Nutgrund. Eine derartige Tülle ist mit wenig Kraft in eine geeignet dimensionierte Ausnehmung eines vorzugsweise aus einem ebenen Blech- oder Kunststoffteil hergestellten Halters einschiebbar. Die Herstellungskosten für diese Befestigungseinrichtung und der Zeitbedarf für die Montage sind deutlich geringer als bei bekannten Anordnungen.

Als besonders vorteilhaft hat es sich erwiesen, wenn die Tüllenkontur nutförmig ausgebildet ist mit zahnartigen Erhebungen am Nutgrund. Zweckmäßigerweise sind hierbei die Erhebungen am Nutgrund gleich hoch, so dass die Leitung mit der Tülle beim Einfügen in eine Aussparung des Halters nicht in einer bestimmten Montageposition ausgerichtet werden muss. Einzelne Erhebungen am Grund der Nut sind dabei wesentlich leichter verformbar als ein glatter zylindrischer Nutgrund, wodurch das Einfügen der Tülle deutlich vereinfacht wird.

Weiterhin hat es sich als zweckmäßig erwiesen, wenn sich zwischen den Erhebungen der Kontur Verbindungsstege erstrecken, welche vorzugsweise schmäler gestaltet sind als die Erhebungen selbst. Auf diese Weise kann ohne Erhöhung der Montagekraft das verbleibende Spiel zwischen der Tülle und dem inneren Rand der Aussparungen im Halter reduziert oder vollständig vermieden werden. Dies gilt insbesondere, wenn die Verbindungsstege jeweils die gleiche Höhe wie die benachbarten Erhebungen aufweisen.

Zur Vermeidung von axialem Spiel zwischen der Leitungstülle und dem Halter ist es weiterhin zweckmäßig, wenn die nutförmige Kontur der Tülle wenigstens eine unregelmäßig gestaltete Seitenwand besitzt. Auf diese Weise entstehen seitlich an der Kontur leicht verformbare Bereiche, welche ohne Erhöhung der Montagekraft auch das axiale Spiel der Tülle in der sie aufnehmenden Aussparung des Halters verringern oder ganz beseitigen.

Eine besonders vorteilhafte Ausgestaltung der erfindungsgemäßen Befestigungseinrichtung erhält man, wenn die Tülle aus leicht verformbarem Kunststoff hergestellt und auf die Leitung, insbesondere auf ein elektrisches Kabel in einem Kraftfahrzeug, in einem Kunststoff-Spritzverfahren aufgespritzt ist, wobei die Tülle vorzugsweise aus Polyuretan (PUR), insbesondere aus Polyuretan auf Polyetherbasis besteht. Ein derartiges Material hat zwar eine größere Shorehärte als Gummiwerkstoffe, durch die vorgeschlagene Gestaltung der Kontur der Tülle kann jedoch die Montagekraft bei minimalem Spiel auf akzeptabel niedrige Werte begrenzt werden, sodass die kostenmäßigen Vorteile einer derartigen Anordnung gegenüber einer nachträglich auf eine Leitung aufgeschobenen Tülle genutzt werden können ohne Erschwernis der Montage und ohne Verringerung der Passgenauigkeit zwischen Tülle und zugeordnetem Halter. Das für die Kunststoffumspritzung verwendete PUR-Material weist vorzugsweise eine Shorehärte von 50A bis 100A, insbesondere von 60A bis 80A auf. Es liegt damit in seiner Elastizität nicht wesentlich über derjenigen von Gummiwerkstoffen und ermöglicht durch die Art seiner Verarbeitung eine deutliche Kostenreduzierung und eine Verringerung des Montageaufwandes.

Weitere vorteilhafte Ausgestaltungen der Erfindung sind in den abhängigen Ansprüchen angegeben und in der folgenden Beschreibung näher erläutert.

### Kurze Beschreibung der Zeichnungen

Ein Ausführungsbeispiel der Erfindung ist in den Zeichnungen dargestellt und in der nachfolgenden Beschreibung näher erläutert. Es zeigen:
- Fig. 1: eine perspektivische Darstellung einer auf eine Leitung aufzubringenden Befestigungstülle,
- Fig. 2: einen Längsschnitt durch eine auf eine Leitung aufgespritzte Tülle gemäß Fig. 1,
- Fig. 3: einen Querschnitt durch die Tülle nach der Linie III-III in Fig. 2 und
- Fig. 4: eine schematisierte perspektivische Darstellung eines Halters einer erfindungsgemäßen Befestigungseinrichtung entsprechend den Figuren 1 bis 3.

### Ausführungsform der Erfindung

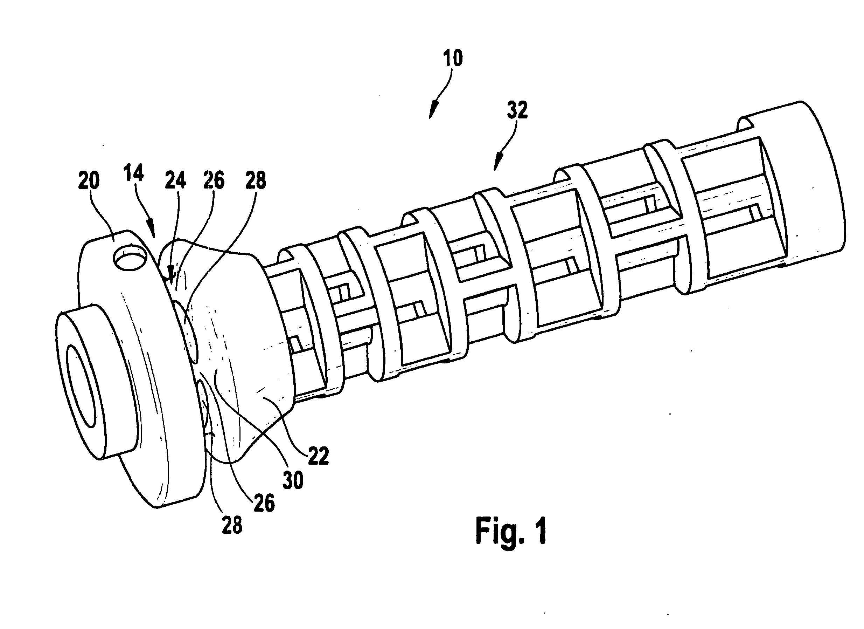

In Fig. 1 ist mit 10 eine Tülle einer Befestigungseinrichtung für eine Leitung, insbesondere für ein elektrisches Kabel 12 in einem Kraftfahrzeug bezeichnet, welche aus Kunststoff besteht und mittels eines Kunststoff-Spritzverfahrens direkt auf das Kabel aufgespritzt ist. Als Kunststoffmaterial für die Tülle 10 eignet sich insbesondere Polyuretan, vorzugsweise Polyuretan auf Polyetherbasis, mit einer Shorehärte von 60A bis 80a. Eine derartige aufgespritzte Tülle 10 verbindet sich oberflächlich beim Aufspritzen mit der Isolation des Kabels 12 und sitzt damit fest und unverrückbar in einer für den jeweiligen Befestigungszweck vorgegebenen Position auf dem Kabel 12. Für spezielle Anwendungen kann die Tülle 10 jedoch auch getrennt von der Leitung oder dem Kabel, beispielsweise aus einem elastomerem Kunststoff, gespritzt und auf das Kabel aufgeschoben werden.

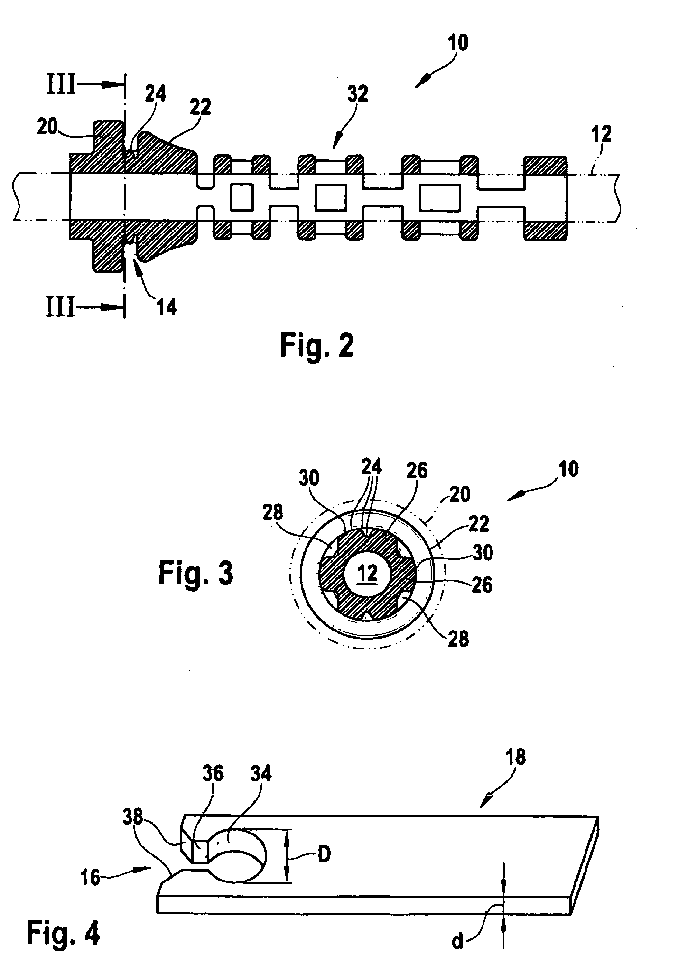

Die Tülle 10 gemäß Fig. 1 umschließt das Kabel vollständig und greift nach der Montage mittel ihre nutförmigen Kontur 14 lösbar in eine Aussparung 16 eines Halters 18 ein, wie er in Fig. 4 dargestellt und später noch näher erläutert wird. Die Oberfläche der Kontur 14 der Tülle 10 ist segmentiert und liegt an der glatten inneren Oberfläche der Aussparung 16 des Halters 18 an.

Die Tülle 10 weist im Bereich ihrer Arretierung in dem Halter 18 zwei flanschförmige Wulste 20 und 22 auf, welche die nutförmige Kontur 14 begrenzen und nach der Montage beidseitig der Aussparung 16 an den Oberflächen des Halters 18 anliegen. Der Nutgrund 24 ist unregelmäßig in Form von Segmenten gestaltet mit einer Mehrzahl zahnartiger, gleich hoher Erhebungen 26. Zwischen den Erhebungen 26 erstrecken sich am Nutgrund 24 Verbindungsstege 28, welche schmäler gestaltet sind als die Erhebungen 26, aber die gleiche Höhe aufweisen wie diese. So ergibt sich am Nutgrund 24 eine im Wesentlichen homogene, aber dennoch leicht verformbare Oberfläche, welche nur eine verhältnismäßig geringe Montagekraft beim Einbringen in die Aussparung 16 des Halters 18 erfordert und hierbei je nach Größe der vorgegebenen, zulässigen Montagekraft einen vollständig oder zumindest weitgehend spielfreien radialen Sitz in dem Halter 18 gewährleistet.

Die Oberfläche der nutförmigen Kontur 14 zwischen den Wulsten 20 und 22 ist in weiten Grenzen frei gestaltbar, wobei im Ausführungsbeispiel die durch den Wulst 20 gebildete Wand vertikal zur Kabelachse und die durch den Wulst 22 gebildete Wand leicht konisch verläuft und beide Wulstränder zum leichteren Eindrücken in die Aussparung 16 abgerundet sind. Eine Seitenwand der nutförmigen Kontur 14 ist in ähnlicher Form wie der Nutgrund 24 unregelmäßig mit leichten Vertiefungen 30 gestaltet, sodass auch die Verformungskräfte an wenigstens einer Seitenwand der nutförmigen Kontur reduziert und damit die Montagekräfte beim Einbringen in die Aussparung 16 weiter verringert werden und dennoch ein spielfreier Sitz der Tülle 10 in der Aussparung 16 des Halters 18 gewährleistet ist.

Zur Erhöhung der Steifigkeit der Gesamtanordnung aus dem Kabel 12 und der aufgespritzten Tülle 10 schließt sich an den Wulst 22 eine gitterförmige, mit den restlichen Teilen der Tülle einstückige, ebenfalls durch das Aufspritzen mit dem Kabel 10 fest verbundene Hülse 32 an, welche einem Abknicken des Kabels 10 bei der Montage entgegenwirkt. Der Außenrand des Wulstes 22 ist abgeschrägt und im Durchmesser von der erforderlichen Höhe der nutförmigen Kontur 14 auf den Durchmesser der Hülse 32 verringert, wodurch sich eine gleichmäßige Verteilung der Montagekräfte auf das Kabel 12 ergibt.

Die Figuren 2 und 3 zeigen einen Längsschnitt und einen Querschnitt durch die Tülle 10, wobei das Kabel 12 zur Verdeutlichung der Form der aufgespritzten Tülle 10 zeichnerisch nur angedeutet ist. Fig. 2 zeigt insbesondere nochmals die zylindrische Form des Wulstes 20 und die zu der nutförmigen Kontur 14 hin leicht abgeschrägte Seitenwand des Wulstes 22 sowie die jeweils abgerundeten äußeren Kanten der Wulste 20 und 20,welche die nutförmige Kontur nach außen begrenzen.

Die Erhebungen 26 am Nutgrund 24 sind aus Fig. 3 deutlicher zu erkennen, wobei der Schnitt III-III in Fig. 2 zwischen den Verbindungsstegen 28 und der inneren Wand des Wulstes 20 liegt. Die zahnförmigen Erhebungen 26 werden im Gegensatz zu den Verbindungsstegen 28 bei der Darstellung in Fig. 3 geschnitten und sind daher schraffiert dargestellt. In den Figuren 1 bis 3 sind gleiche Teile mit gleichen Bezugszeichen versehen.

Fig. 4 zeigt in stark schematisierter Form den Halter 18 für das Kabel 12 mit der aufgespritzten Tülle 10. Hierbei sind insbesondere die Gestaltung der Aussparung 16 und die Wandstärke d des Halters 18 von Bedeutung. Der Durchmesser D der Aussparung 16 im Aufnahmebereich der nutförmigen Kontur 14 soll etwa dem Außendurchmesser am Nutgrund 24 entsprechen und die Wandstärke d des Halters 18 der lichten Weite der nutförmigen Kontur 14. Diese Abmessungen können in gewissen Grenzen variiert werden entsprechend der zugelassenen Montagekraft beim Einführen der Tülle 10 mit dem Kabel 12 in die Aussparung 16, wobei die Gestaltung der einzelnen Elemente der nutförmigen Kontur 14 und die Elastizität des verwendeten Kunststoffes für die Tülle 10 die Montagekraft bestimmen. Die Aussparung 16 gliedert sich im Wesentlichen in eine kreisrunde Aufnahmeöffnung 34, eine die Arretierung der Tülle 10 mit dem Kabel 12 in der Aufnahmeöffnung 34 sichernde Verengung 36 und eine konisch nach außen verbreiterte Montageöffnung 38 für die Tülle 10 mit dem Kabel 12. Der Halter 18 ist in der Regel aus einem Blechteil gestanzt oder er besteht aus einem Kunststoffteil, jeweils mit der geeigneten Wandstärke d entsprechend der Breite der nutförmigen Kontur 14.

Durch die erfindungsgemäße Gestaltung der Befestigungseinrichtung wird es ermöglicht, dass bekannte, als Einzelteile hergestellte und auf eine Leitung aufgeschobene Tüllen aus Gummimaterial durch auf die zu befestigenden Leitungen direkt aufgespritzte oder aufgeschobene Tüllen ersetzt werden, wobei die größere Shorehärte des Kunststoffmaterials durch die erfindungsgemäße Gestaltung ausgeglichen wird und hierbei die höhere Festigkeit, die geringeren Kosten und der feste Sitz der Tülle auf der Leitung in vorteilhafter Weise genutzt werden können.

## Patentansprüche

1. Befestigungseinrichtung für eine Leitung, insbesondere für ein elektrisches Kabel (12) in einem Kraftfahrzeug, mit einer in einem Halter (18) arretierbaren, die Leitung wenigstens teilweise umschließenden Tülle (10) aus elastisch verformbarem Material, welche mittels einer Kontur (14) in einer Aussparung (16) des Halters (18) lösbar befestigt ist, wobei die Tülle (10) aus Kunststoff gespritzt und die Oberfläche der Kontur (14) segmentiert gestaltet ist, **dadurch gekennzeichnet dass** die Tüllenkontur (14) nutförmig ausgebildet ist mit zahnartigen Erhebungen (26) an einem Nutgrund (24).

2. Befestigungseinrichtung nach Anspruch 1, **dadurch gekennzeichnet, dass** die Kontur (14) der Tülle (10) nutförmig ausgebildet ist mit einem unregelmäßig gestalteten Nutgrund (24).

3. Befestigungseinrichtung nach einem der vorhergehenden Ansprüche, **dadurch gekennzeichnet, dass** der Nutgrund (24) eine Mehrzahl gleich hoher Erhebungen (26) aufweist.

4. Befestigungseinrichtung nach einem der vorhergehenden Ansprüche, **dadurch gekennzeichnet, dass** sich zwischen den Erhebungen (26) der Kontur (14) Verbindungsstege (28) erstrecken.

5. Befestigungseinrichtung nach Anspruch 4, **dadurch gekennzeichnet, dass** die Verbindungsstege (28) schmäler gestaltet sind als die Erhebungen (26).

6. Befestigungseinrichtung nach Anspruch 4 oder 5, **dadurch gekennzeichnet, dass** die Verbindungsstege (28) jeweils die gleiche Höhe wie die benachbarten Erhebungen (26) aufweisen.

7. Befestigungseinrichtung nach einem der vorhergehenden Ansprüche, **dadurch gekennzeichnet, dass** die Kontur (14) der Tülle (10) nutförmig ausgebildet ist mit wenigstens einer unregelmäßig (30) gestalteten Seitenwand.

8. Befestigungseinrichtung nach einem der vorhergehenden Ansprüche, **dadurch gekennzeichnet, dass** die Tülle (10) auf die Leitung, insbesondere auf ein elektrisches Kabel (12), aufgespritzt ist.

9. Befestigungseinrichtung nach einem der vorhergehenden Ansprüche, **dadurch gekennzeichnet, dass** die Tülle (10) aus Polyuretan (PUR), vorzugsweise aus Polyuretan auf Polyetherbasis, besteht.

10. Befestigungseinrichtung nach einem der vorhergehenden Ansprüche, **dadurch gekennzeichnet, dass** das Material der Tülle eine Shorehärte von 50A-100A, vorzugsweise von 60A bis 80A, besitzt.

11. Befestigungseinrichtung nach einem der vorhergehenden Ansprüche, **dadurch gekennzeichnet, dass** der Durchmesser einer im Wesentlichen runden Aufnahmeöffnung (34) im Halter (18) für die Kontur (14) der Tülle (10) etwa gleich groß ist wie deren größter Durchmesser.

12. Befestigungseinrichtung nach einem der vorhergehenden Ansprüche, **dadurch gekennzeichnet dass** die Aufnahmeöffnung (34) für die Tülle (10) zum Rand des Halters (18) hin offen ist und im Einführungsbereich (36) eine gegenüber der Weite der Aufnahmeöffnung (34) reduzierte Weite besitzt.

13. Befestigungseinrichtung nach einem der vorhergehenden Ansprüche, **dadurch gekennzeichnet, dass** die Dicke (d) des Halters (18) etwa gleich der Breite der Kontur (14) ist.

## Claims

1. Fastening device for a line, in particular for an electrical cable (12) in a motor vehicle, having a bushing (10) which can be locked in a holder (18), at least partially surrounds the line, is composed of an elastically deformable material and is detachably fastened by means of a contour (14) in a cutout (16) in the holder (18), wherein the bushing (10) is injection-moulded from plastic and the surface of the contour (14) is of segmented design, **characterized in that** the bushing contour (14) is in the form of a groove and has tooth-like raised portions (26) on its groove base (24).

2. Fastening device according to Claim 1, **characterized in that** the contour (14) of the bushing (10) is in the form of a groove with a groove base (24) of irregular design.

3. Fastening device according to either of the preceding claims, **characterized in that** the groove base (24) has a large number of raised portions (26) of identical height.

4. Fastening device according to one of the preceding claims, **characterized in that** connecting webs (28) extend between the raised portions (26) of the contour (14).

5. Fastening device according to Claim 4, **characterized in that** the connecting webs (28) are of narrower design than the raised portions (26).

6. Fastening device according to Claim 4 or 5, **characterized in that** the connecting webs (28) each have the same height as the adjacent raised portions (26).

7. Fastening device according to one of the preceding claims, **characterized in that** the contour (14) of the bushing (10) is in the form of a groove with at least one side wall of irregular (30) design.

8. Fastening device according to one of the preceding claims, **characterized in that** the bushing (10) is extruded onto the line, in particular onto an electrical cable (12).

9. Fastening device according to one of the preceding claims, **characterized in that** the bushing (10) is composed of polyurethane (PUR), preferably of polyether-based polyurethane.

10. Fastening device according to one of the preceding claims, **characterized in that** the material of the bushing has a Shore hardness of 50 A - 100 A, preferably of 60 A to 80 A.

11. Fastening device according to one of the preceding claims, **characterized in that** the diameter of a substantially round receiving opening (34) in the holder (18) for the contour (14) of the bushing (10) is approximately equal in size to the maximum diameter of the said bushing.

12. Fastening device according to one of the preceding claims, **characterized in that** the receiving opening (34) for the bushing (10) is open at the edge of the holder (18) and, in an insertion region (36), has a width which is reduced in comparison to the width of the receiving opening (34).

13. Fastening device according to one of the preceding claims, **characterized in that** the thickness (D) of the holder (18) is approximately the same as the width of the contour (14).

## Revendications

1. Dispositif de fixation pour une conduite, en particulier pour un câble électrique (12) dans un véhicule automobile, comprenant une gaine (10) pouvant être bloquée dans un support (18), qui entoure au moins partiellement la conduite, constituée d'un matériau déformable élastiquement, laquelle est fixée de manière amovible au moyen d'un contour (14) dans un évidement (16) du support (18), la gaine (10) étant moulée par injection de plastique et la surface du contour (14) étant configurée sous forme segmentée, **caractérisé en ce que** le contour (14) de la gaine est réalisé en forme de rainure avec des rehaussements en forme de dents (26) au niveau d'une base de rainure (24).

2. Dispositif de fixation selon la revendication 1, **caractérisé en ce que** le contour (14) de la gaine (10) est réalisé en forme de rainure avec une base de rainure (24) de configuration irrégulière.

3. Dispositif de fixation selon l'une, quelconque des revendications précédentes, **caractérisé en ce que** la base de rainure (24) présente une pluralité de rehaussements de même hauteur (26).

4. Dispositif de fixation selon l'une quelconque des revendications précédentes, **caractérisé en ce que** des nervures de liaison (28) s'étendent entre les rehaussements (26) du contour (14).

5. Dispositif de fixation selon la revendication 4, **caractérisé en ce que** les nervures de liaison (28) sont configurées sous forme plus étroite que les rehaussements (26).

6. Dispositif de fixation selon la revendication 4 ou 5, **caractérisé en ce que** les nervures de liaison (28) présentent à chaque fois la même hauteur que les rehaussements adjacents (26).

7. Dispositif de fixation selon l'une quelconque des revendications précédentes, **caractérisé en ce que** le contour (14) de la gaine (10) est réalisé en forme de rainure avec au moins une paroi latérale de configuration irrégulière (30).

8. Dispositif de fixation selon l'une quelconque des revendications précédentes, **caractérisé en ce que** la gaine (10) est moulée par injection sur la conduite, notamment sur un câble électrique (12).

9. Dispositif de fixation selon l'une quelconque des revendications précédentes, **caractérisé en ce que** la gaine (10) se compose de polyuréthane (PUR), de préférence de polyuréthane à base de polyéther.

10. Dispositif de fixation selon l'une quelconque des revendications précédentes, **caractérisé en ce que** le matériau de la gaine présente une dureté Shore de 50A-100A, de préférence de 60A à 80A.

11. Dispositif de fixation selon l'une quelconque des revendications précédentes, **caractérisé en ce que** le diamètre d'une ouverture de réception (34) essentiellement ronde dans le support (18) pour le contour (14) de la gaine (10) est approximativement aussi grand que le diamètre maximal de la gaine.

12. Dispositif de fixation selon l'une quelconque des revendications précédentes, **caractérisé en ce que** l'ouverture de réception (34) pour la gaine (10) est ouverte vers le bord du support (18) et possède, dans la région de l'insertion (36), une largeur réduite par rapport à la largeur de l'ouverture de réception (34).

13. Dispositif de fixation selon l'une quelconque des revendications précédentes, **caractérisé en ce que** l'épaisseur (d) du support (18) est approximativement égale à la largeur du contour (14).
